# EUROPÄISCHE PATENTSCHRIFT

(11) **EP 1 352 221 B1**
(45) Veröffentlichungstag und Bekanntmachung des Hinweises auf die Patenterteilung: **25.02.2015**
(21) Anmeldenummer: 01990573.6
(22) Anmeldetag: 17.12.2001
(51) Int. Cl.: G01F 23/284

(54) **VERFAHREN UND VORRICHTUNG ZUM SENDEN UND EMPFANGEN VON ELEKTROMAGNETISCHEN WELLEN MIT EINER FREQUENZ KLEINER 3 GHZ ÜBER EINE EINZIGE ANTENNENEINRICHTUNG**
METHOD AND DEVICE FOR TRANSMITTING AND RECEIVING ELECTROMAGNETIC WAVES WITH A FREQUENCY LESS THAN 3 GHZ VIA A SINGAL ANTENNA UNIT
PROCEDE ET DISPOSITIF POUR EMETTRE ET RECEVOIR DES ONDES ELECTROMAGNETIQUES D'UNE FREQUENCE INFERIEURE A 3 GHZ PAR L'INTERMEDIAIRE D'UNE SEULE UNITE ANTENNE

(30) Priorität: 19.01.2001 DE 10102439
(43) Veröffentlichungstag der Anmeldung: 15.10.2003
(73) Patentinhaber: VEGA Grieshaber KG, 77709 Wolfach (DE)
(72) Erfinder: FEHRENBACH, Josef, 77716 Haslach (DE); GRIESSBAUM, Karl, 77796 Mühlenbach (DE); RAFFALT, Felix, 77756 Hausach (DE)
(74) Vertreter: Preuss, Udo
(86) Internationale Anmeldenummer: PCT/EP2001/014899
(87) Internationale Veröffentlichungsnummer: WO 2002/057724

(56) Entgegenhaltungen:
- EP-A- 0 882 955
- US-A- 4 392 523
- US-A- 4 945 321
- US-A- 5 233 352
- US-A- 5 517 198

## Beschreibung

### Technisches Gebiet

Die Erfindung betrifft ein Füllstandmessgerät, das nach dem Prinzip der Laufzeitmessung von elektromagnetischen Wellen im Frequenzbereich kleiner 3 GHz, insbesondere kleiner 2,5 GHz arbeitet.

Zur Füllstandmessung werden Messsysteme eingesetzt, die aufgrund der gemessenen Laufzeit von elektromagnetischen Wellen von einem in einer Behälterdecke montierten Sensor - allgemein auch als Füllstandmessgerät bezeichnet - zur Füllgutoberfläche und zurück die Distanz zwischen Sensor und Füllgut bestimmen. Aus der Kenntnis der Behälterhöhe kann dann die gesuchte Füllstandshöhe berechnet werden. Solche auch unter der Fachbezeichnung Füllstandradar bekannten Füllstandmessgeräte beruhen allesamt auf der Eigenschaft elektromagnetischer Wellen, sich innerhalb eines homogenen nichtleitenden Mediums mit konstanter Geschwindigkeit auszubreiten und an der Grenzfläche unterschiedlicher Medien zumindest teilweise reflektiert zu werden. Jede Grenzschicht zweier Medien mit unterschiedlichen Dielektrizitätskonstanten erzeugt bei Auftreffen der Welle ein Radarecho. Je größer der Unterschied der beiden Dielektrizitätskonstanten ist, desto stärker ändert sich der Wellenwiderstand der Wellenausbreitung und desto größer ist das zu beobachtende Echo.

Zur Bestimmung der gesuchten Wellenlaufzeit sind unterschiedliche Radarprinzipien bekannt. Die beiden hauptsächlich angewandten Verfahren sind zum einen das Pulslaufzeitverfahren (Pulsradar) und zum anderen das frequenzmodulierte Dauerstrichverfahren (FMCW-Radar). Das Pulsradar bedient sich der pulsformigen Amplitudenmodulation der abzustrahlenden Welle und ermittelt die direkte Zeitdauer zwischen Aussendung und Empfang der Pulse. Das FMCW-Radar bestimmt die Laufzeit auf indirektem Weg über die Aussendung eines frequenzmodulierten Signals und Differenzbildung zwischen gesendeter und empfangener Momentanfrequenz.

Neben den unterschiedlichen Radarprinzipien werden auch je nach Anwendung verschiedene Frequenzbereiche der elektromagnetischen Wellen benutzt. So existieren beispielsweise Pulsradars mit Trägerfrequenzen im Bereich zwischen 5 und 30 GHz und daneben ebenso solche, die im Basisband als sogenannte Monopulsradars ohne Trägerfrequenz arbeiten.

Außerdem sind eine Reihe von Verfahren und Vorrichtungen bekannt die elektromagnetische Welle auf die Füllgutoberfläche und zurück zu leiten. Dabei unterscheidet man grundsätzlich zwischen in den Raum abgestrahlter Welle und durch eine Leitung geführter Welle. Bei in den Raum abgestrahlten Wellen ist eine Unterscheidung in sogenannte bistatische Anordnungen und sogenannte monostatische Anordnungen möglich.

Bistatische Anordnungen besitzen zwei getrennte Antennen, wovon die eine zum Senden und die andere zum Empfangen dient. Bei monostatischen Anordnungen dient eine einzige Antenne gleichzeitig zum Senden und Empfangen.

Sensoren mit geführten elektromagnetischen Wellen, die nach dem Reflexionsprinzip arbeiten, sind normalerweise immer monostatisch ausgeführt. Ein Vorteil einer monostatischen Sensorrealisierung besteht in der Einsparung einer zweiten Antenne oder Wellenleitereinkopplung und damit im einfachen, platzsparenden Aufbau. Ein Nachteil ergibt sich durch die schaltungstechnische Notwendigkeit, sowohl die Sender- wie auch die Empfängerschaltung - diese werden auch als Sende- und Empfangseinrichtung bezeichnet - mit der einen Antenne bzw. der vorangeschalteten Wellenleitereinkopplung zu verbinden. Dabei taucht das Problem auf, Sender und Empfänger trotz der gemeinsamen Verbindung mit der Antenne und der Wellenleitereinkopplung gegenseitig zu isolieren. Isolation meint in diesem Fall die Verhinderung des Signalübertritts von einem Schaltungsteil zum anderen. Ohne diese Isolation würde das Sendesignal auf direktem Weg zum Empfänger gelangen und aufgrund seiner relativ hohen Amplitude ein vergleichsweise großes Empfangssignal erzeugen.

Im Vergleich zu den beabsichtigten Empfangssignalen, die aus Reflexionen auf der Messstrecke resultieren und durch den Übertragungsweg und die Reflexion am Messobjekt mehr oder weniger stark gedämpft sind, bewirkt das Sendesignal , das ohne Isolation zum Empfänger gelangt, eine um ein Vielfaches größere Empfangsamplitude. Trotz der Tatsache, dass dieses im Empfänger registrierte Sendesignal zeitlich früher als das auszuwertende Echo vom Messobjekt eintrifft und sich damit nicht direkt mit Nutzechos überlagert, können sich durch die fehlende Isolation schwerwiegende Probleme ergeben, die eine exakte Entfernungsmessung erschweren oder gar verhindern. Die Amplitudendynamik des Empfängers muss unter diesen Umständen auf einen viel größeren Bereich ausgerichtet sein. Falls der Empfänger die große Amplitude des Sendesignals nicht verarbeiten kann und sogar ein Begrenzungseffekt eintritt, kann ein solcher Effekt noch längere Zeit nachwirken bis in die Zeitspanne hinein, in der die Nutzechos zu erwarten sind. Als Folge davon würden Nutzechos nicht korrekt empfangbar sein und damit wäre das Messergebnis in Frage gestellt. Außerdem ist damit zu rechnen, dass die Eingangsanpassung des Empfängers nicht ideal ist. Jedes eintreffende Echosignal wird am Empfängereingang zu einem kleinen Teil wieder reflektiert und trifft üblicherweise nach weiterer Reflexion innerhalb der Schaltung ein zweites bzw. weiteres Mal am Empfänger ein. Dieses als Klingeln charakterisierbare Phänomen spielt keine Rolle bei üblichen Echosignalen, die von Reflexionen innerhalb der Messstrecke kommen. Bei fehlender Isolation zwischen Sender und Empfänger aber sind diese mehrfachreflektierten Signale des Sendesignals trotz entsprechender Dämpfung noch in der Größenordnung der Nutzechoamplituden. Durch ihre zeitliche Lage im Anschluss an das Sendesignal überlagern sie sich mit Reflexionen von Messobjekten, die nahe am Sensor platziert sind. Das führt zu Messfehlern im Nahbereich des Messgerätes.

### Stand der Technik

Um Sender, Empfänger und Antenne bzw. Wellenleitereinkopplung zusammenzuschalten sind folgende Lösungen bekannt. In der DE 42 40 492 wird die Verwendung eines Richtkopplers oder Zirkulators vorgeschlagen. Über die praktische Schaltungsausführung eines solchen Schaltungsteils finden sich dort keine Hinweise. Allerdings ist beschrieben, wie ein Empfangsmischer ebenfalls mit Richtkopplern so realisiert werden kann, dass Empfangssignal und Lokaloszillatorsignal gegenseitig isoliert sind. Die Richtkoppler sind in dieser Schrift als sogenannte Hybridring-Koppler in Streifenleitungstechnik ausgeführt. Ähnliche Richtkoppler -Lösungen finden sich auch in der US 3,621,400.

Die Streifenleitungstechnik ist allerdings nur sinnvoll anwendbar für Signalfrequenzen im Mikrowellenbereich (3-30 GHz). Übliche Radarsensoren verwenden aber wie bereits erwähnt nicht nur Trägerfrequenzen, beispielsweise im Bereich zwischen 5 und 30 GHz, sondern es gibt auch die Monopulsradars, die ohne Trägerfrequenzen zu benutzen kurze Pulse aussenden. Der Frequenzbereich dieser Sendesignale liegt typischerweise im Bereich von einigen Megahertz bis wenigen Gigahertz. Damit scheidet eine Richtkopplerrealisierung in Streifenleitungstechnik für solche Monopulsradars aus.

In der US 5,517,198 ist eine Möglichkeit beschrieben, wie bei einem Pulsradar, häufig auch als TDR (time domain reflectometrie) - Sensor bezeichnet, eine breitbandige Isolation zwischen Sender und Empfänger zu erreichen ist. Die dort beschriebene Lösung verwendet eine Widerstandsbrücke zur Aufteilung des Sendesignals in zwei identische Anteile. Der eine Anteil wird direkt in einen Zweig des Empfängers geführt, der andere gelangt sowohl in einen zweiten Zweig des Empfängers als auch auf die Messstrecke. Reflexionen von der Messstrecke gelangen überwiegend nur in den zweiten Empfangszweig. Durch Differenzbildung zwischen den beiden Empfangszweigen eliminiert sich das Sendesignal im Empfänger, während die Reflexionen von der Messstrecke unbeeinflusst bleiben. Diese Lösung ist relativ aufwändig, da sie zwei Empfangszweige vorsieht, und erzeugt durch die Signalverteilung über Widerstände hohe Amplitudendämpfungen des Nutzsignals.

In der US 5,609,059 wird eine weitere Sende- und Empfangseinheit eines TDR-Füllstandmessers beschrieben, mit Hilfe derer unerwünschte Effekte beim Empfangen eines reflektierten elektromagnetischen Signals vermindert werden. Das Funktionsprinzip beruht künstlich absichtlich erzeugten Reflexionssignals und des an der Füllgutoberfläche reflektierten Signals. Das künstliche Reflexionssignal wird durch einen auf die Impedanz des Übertragungskabels abgestimmten Widerstand erzeugt, welcher zu dem Übertragungskabel parallel geschaltet ist. Die an der Füllgutoberfläche reflektierten Signale werden innerhalb eines Zeitfensters, das durch eine Steuereinheit getaktet wird, empfangen und ausgewertet.

Eine weitere Methode um ungewünschte Interferenzerscheinungen in der Signalantwort zu unterdrücken wird in der US 5,365,178 beschrieben. Hier werden die von der Füllgutoberfläche reflektierten Signale einem Mixer zugeführt und den von der Sendeeinheit entsandten frequenzmodulierten Signalen gegenübergestellt, woraus sich eine vom Füllstand abhängige Frequenzdifferenz ergibt. In diesem Differenzsignal sind ungewünschte Störfrequenzen enthalten, die durch Reflexionen der Signale an der Behälterinnenseite oder in der Sende- und Empfangseinheit selbst entstehen. Diese unerwünschten Signale liegen außerhalb des Frequenzbereiches des erwünschten Signals und werden mit eines Bandpassfilters ausgefiltert.

EP 0 882 955 A1 offenbart ein mit Mikrowellen arbeitendes Füllstandsmessgerät mit einem Generator zur Erzeugung von Mikrowellen und mindestens einer Antenne zum Senden und Empfangen von Mikrowellen. Ein Sendesignal wird über eine Sende-Empfangsweiche und über eine Mikrowellenleitung zu der oberhalb eines Füllgut enthaltenden Behälters angeordnete Antenne übertragen. Von der Antenne ausgesendete Mikrowellen werden an der Oberfläche des Füllguts reflektiert und die Echowellen von der Antenne aufgenommen. Ein entsprechendes Empfangssignal wird über die Sende-Empfangsweiche einer Empfangs- und Auswerteschaltung zugeführt.

US 4 392 523 offenbart ein Verfahren und eine Vorrichtung zum Kontrollieren eines Levels einer geschmolzenen Metalloberfläche in einer Stranggießeinrichtung mit einem Transformator in Form eines Differentialübertragers zwischen Sende- und Empfangseinrichtung sowie Prozessankopplung.

US 4 945 321 offenbart einen π/2 Leistungsteiler für eine Radiofrequenzantenne einer NMR-Tomographie-Vorrichtung.

US 5 233 352 offenbart einen Füllstandsmesser auf Basis einer Korrelationsmessung von gesendetem und empfangenem Signal unter Verwendung eines Richtkopplers.

### Darstellung der Erfindung

Das der Erfindung zugrunde liegende technische Problem besteht darin, ein monostatisch aufgebautes Füllstandmessgerät, insbesondere ein Basisband-Radar- bzw. TDR-Füllstandmessgerät, bereit zu stellen, das eine einfache, kostengünstige Kombination von Sender, Empfänger und Antenne bzw. Wellenleitereinkopplung erlaubt, die eine weitgehende Isolation zwischen Sender und Empfänger gewährleistet. Diese Kombination von Sender, Empfänger und Antenne bzw. Wellenleitereinkopplung sollte außerdem so breitbandig sein, dass sie, wie beispielsweise beim Monopuls-Radar notwendig, ein Frequenzband zwischen einigen Megahertz und wenigen Gigahertz überträgt. Die Amplitudendämpfung der Sende- /Empfangssignale sollte dabei möglichst gering sein.

Ferner liegt der Erfindung das technische Problem zugrunde, ein einfaches und kostengünstiges Verfahren zum Senden und Empfangen von elektromagnetischen Wellen mit einer Frequenz kleiner 3 GHz über eine einzige Antenneneinrichtung anzugeben.

Diese technischen Probleme werden durch ein Füllstandmessgerät mit den Merkmalen des Anspruchs 1 bzw. durch ein Verfahren mit den Merkmalen des Anspruchs 11 gelöst.

Durch die Verwendung eines Hochfrequenz-Übertragers bzw. Transformators, der durch entsprechende Wicklungsgeometrie und Beschaltung breitbandig im Frequenzbereich bis ungefähr 3 GHz, insbesondere bis ungefähr 2,5 GHz, als Richtkoppler wirkt und eine definierte Isolation zwischen bestimmten daran angeschlossenen Schaltungskomponenten zum Senden und Empfangen erlaubt, wird eine äußerst kostengünstige wie auch effektive Lösung bereitgestellt. Es ist schließlich noch anzumerken, dass hier unter einer Antenneneinrichtung auch beispielsweise ein oder mehrere Wellenleiter zu subsumieren sind, wie sie im Stand der Technik zur Leitung der elektromagnetischen Wellen und der vom Füllgut reflektierten Signalen bekannt ist.

Ein großer Vorteil dieser Lösung besteht darin, dass eine gute Anpassung der Impedanzen der einzelnen Komponenten, besonders der Eingangsimpedanz für reflektierte Signale von der Messstrecke, möglich ist. Bei einer Fehlanpassung würden Signale mehrfach reflektiert und es würden sich zusätzliche störende Echos ergeben.

Die Festlegung von Windungsverhältnissen ermöglicht jegliche gewünschten Impedanztransformationen, so dass die Impedanzanpassung zwischen einzelnen Schaltungskomponenten optimiert werden kann. Als besonders geeignet haben sich sogenannte Doppelloch-Übertrager in SMD-Bauweise erwiesen. Durch entsprechendes Ferritmaterial und entsprechende Bewicklung des Doppellochkerns übertragen diese Transformatoren Frequenzen bis zu 3 GHz, insbesondere bis 2,5 GHz.

Es gibt zwei grundsätzlich verschiedene Wicklungsanordnungen dieser Übertrager, die sich in unterschiedlicher Weise zur Lösung des zuvor genannten technischen Problems einsetzen lassen. Die eine Gruppe wird hier unter dem Begriff Differentialübertrager zusammengefasst, die andere Gruppe von Übertragern wird gemäß ihrem Verwendungszweck als Übertrager-Richtkoppler bezeichnet. Beide Ausführungen sind prinzipiell bekannt. Während Differentialübertrager üblicherweise in Frequenzmischern und als Balun eingesetzt werden, benötigt man Übertrager-Richtkoppler vor allem in der Verteilung der Satelliten-TV-Empfangssignale. Bei dieser Verwendung wird über den Richtkoppler ein gewisser Anteil aus einem Übertragungskabel für den Anschluss eines Empfängers ausgekoppelt, während der überwiegende Signalanteil auf der Stammleitung weitergeführt wird.

Als vorteilhaft hat sich in bestimmten Fällen erwiesen, wenn die Isolation zwischen der Sendeeinrichtung und Empfängereinrichtung nicht ganz ideal ist, sondern sich definiert reduzieren lässt. Dies ist dort wichtig, wo ein Sensor als Entfernungs-Referenzmarke den Bruchteil des Sendesignals benutzt, der aufgrund einer nicht ganz vollkommenen Isolation direkt den Empfänger erreicht. Ein derartig arbeitender Sensor ist beispielsweise in der DE 42 40 491 beschrieben.

Vorzugsweise ist der Hochfrequenz-Übertrager ein Differentialübertrager, der drei magnetisch miteinander gekoppelte Wicklungen aufweist, von denen zwei miteinander verbunden sind. Diese einfache Bauweise ist kostengünstig und zur Einstellung der jeweiligen Impedanzen sehr zweckmäßig. Indem alle drei Wicklungen die gleiche Anzahl von Windungen aufweisen ist die Einstellung der Impedanzen der am Differentialübertrager angeschlossenen Komponenten an allen Toren bis zur idealen Impedanzanpassung durchführbar. Dadurch erfährt das empfangene Echosignal nicht zusätzliche Reflexionen und kann damit keine Verfälschung des Messergebnisses bewirken. Bei dieser Bauweise ist es auch ohne weiteres möglich, eine Impedanzveränderung vorzunehmen, so dass keine vollständige Isolation zwischen dem Tor, an dem das Sendesignal anliegt, und dem Tor, an dem das Empfängersignal abgegeben wird, gegeben ist. Dieser unmittelbar vom Sender an den Empfänger weitergeleitete Signalanteil kann, wie zuvor bereits angedeutet, in vorteilhafter Weise als Entfernungs-Referenzmarke benutzt werden. Eine weitere, nicht erfindungsgemäße, bevorzugte Ausführungsform besteht darin, dass der Differentialübertrager zwei Wicklungen umfasst, die die gleiche Anzahl von Windungen aufweisen, die dritte Wicklung dabei aber eine hiervon unterschiedliche Windungsanzahl, insbesondere doppelt so viele Windungen wie eine der zwei erstgenannten Wicklungen umfasst. Dadurch ist die für allseitige Anpassung notwendige Impedanz der Empfängereinrichtung viermal so hoch wie bei den Windungsverhältnissen des zuvor erläuterten Ausführungsbeispiels. Die höhere Empfängerimpedanz ist oft von Vorteil, weil Empfängereinrichtungen in vielen Fällen leichter hoch- als niederohmig ausführbar sind. Bei gegebener Empfängerimpedanz kann durch Anpassung der Wicklungsverhältnisse des Differentialübertragers für eine optimale Impedanzanpassung gesorgt werden. Je nach den Gegebenheiten ist es aber auch möglich, andere Windungsverhältnisse vorzusehen.

Allgemein kann gesagt werden, dass durch die Verwendung eines Hochfrequenz-Übertragers eine niederohmige Ableitung von statischer Aufladung auf dem Wellenleiter ermöglicht ist, was insbesondere bei beispielsweise Kunststoffgranulat als Füllgut auftritt. Durch Reibung des Füllguts am Wellenleiter bei Befüllung oder Entleerung kann sich dieser statisch aufladen. Die dabei entstehenden sehr hohen Spannungen können die am Wellenleiter angeschlossene elektronische Schaltung zerstören, wenn sie nicht gegen Behältermasse abgeleitet werden. Dies wird durch die einfache niederohmige Verbindung zwischen Wellenleiter bzw. der Prozessankopplung und der Behältermasse verhindert. Bei der erfindungsgemäßen Verwendung eines Übertrager-Richtkopplers als Hochfrequenzübertrager erfolgt im Gegensatz zum Differentialübertrager keine gleichmäßige, sondern immer eine ungleichmäßige Signalaufteilung. Dadurch erfolgt eine größere Signaldämpfung als beim Differentialübertrager, aber es ist von Vorteil, dass im Empfangsfall hauptsächlich nur die Empfängerimpedanz für die reflexionsfreie Signalanpassung geändert werden muss, die geeignete Impedanzanpassung des Senders ist eventuell schwieriger.

Schließlich ist noch hervorzuheben, dass auch trifilar bewickelte ringförmige Kerne als Hochfrequenz-Übertrager eingesetzt werden können. Hier resultiert die Breitbandigkeit aus der speziellen Art der Bewicklung, die bei hohen Frequenzen eine kapazitive Leitungsankopplung zwischen den Windungsdrähten ermöglicht.

### Kurze Beschreibung der Zeichnungen

Im folgenden werden zum besseren Verständnis und zur weiteren Erläuterung mehrere vorteilhafte Ausführungsbeispiele der Erfindung unter Bezugnahme auf die beigefügten Zeichnungen näher beschrieben. Es zeigt:
- Fig. 1: ein Blockschaltbild eines erfindungsgemäßen Radar-Füllstandmessgeräts,
- Fig. 2: eine erste erfindungsgemäße Schaltungsausführung unter Verwendung eines Differentialübertragers, die keine Ausführungsform der vorliegenden Erfindung darstellt,
- Fig. 3: das Viertor-Ersatzschaltbild der Schaltung von Fig. 2,
- Fig. 4: eine Variante der Schaltung von Fig. 2 mit erhöhter Empfängerimpedanz,
- Fig. 5: eine weitere Variante der Schaltung von Fig. 2 mit potentialgetrennter Messstrecke,
- Fig. 6: ein Schaltbild eines erfindungsgemäßen Übertrager-Richtkopplers,
- Fig. 7: das Viertor-Ersatzschaltbild des Übertrager-Richtkopplers von Fig. 6 und
- Fig. 8: eine weitere erfindungsgemäße Schaltungsausführung unter Verwendung eines Übertrager-Richtkopplers.

### Beschreibung bevorzugter Ausführungsformen der Erfindung

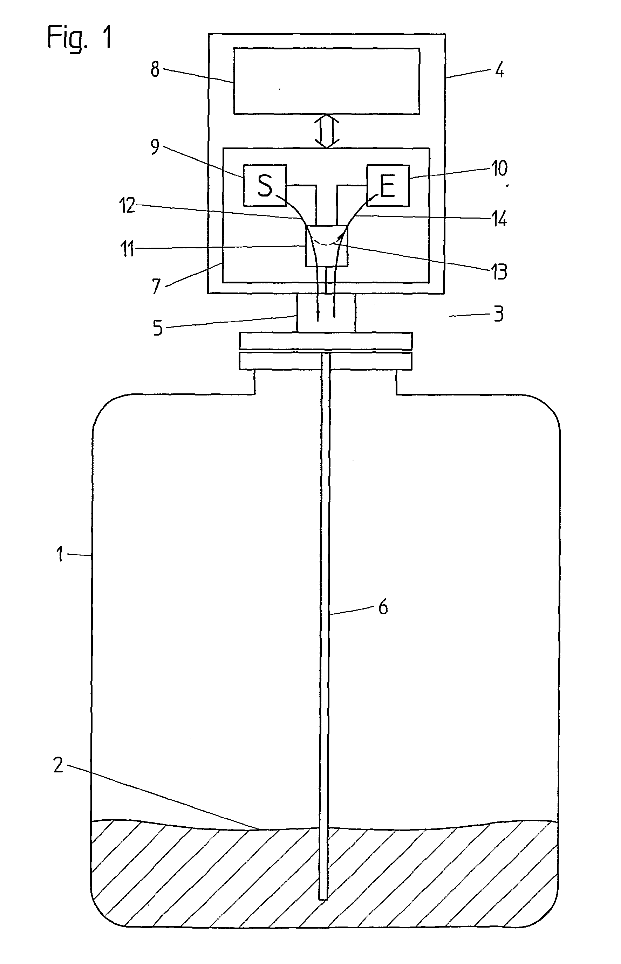

In Fig. 1 ist ein typischer Behälter 1 mit einem Füllgut 2 dargestellt. Das Füllstandmessgerät 3 ist beispielsweise oben auf eine Öffnung des Behälters 1 montiert und ermittelt nach dem Prinzip der Reflektometrie über die Bestimmung der Signallaufzeit zwischen einer Elektronik 4 und einem Füllgut 2 (Hin- und Rückweg) den Füllstand innerhalb des Behälters 1. Die Einspeisung der in der Elektronik 4 erzeugten Messsignale in die überwachte Messstrecke innerhalb des Behälters erfolgt über eine sogenannte Prozessankopplung 5. Unter dem Begriff Prozessankopplung soll allgemein der Übergang des Messsignals von der Elektronik 4 und einer eventuell daran angeschlossenen Leitung, beispielsweise einem Koaxialkabel, auf die Messstrecke und damit die Umwandlung in eine elektromagnetische Welle, entweder geführt oder freistrahlend, verstanden werden. Bei freistrahlenden Radarsensoren benutzt man zu diesem Zweck Antennen.

Im Fall des in Fig. 1 dargestellten beispielhaften Sensors mit einem Wellenleiter 6 zur Führung der Welle umfasst die Prozessankopplung 5 die mechanisch und elektrisch taugliche Einkopplung des Signals von der Elektronik auf den Wellenleiter 6, der beispielsweise eine sogenannte Eindrahtleitung ist.

Die Elektronik 4 enthält eine Frontend-Elektronik 7 und weitere Elektronikkomponenten 8 wie beispielsweise ein Netzteil, eine Signalverarbeitungsschaltung, eine Echoauswerteschaltung und Ein-/ Ausgabeschaltungen bzw. eine Kommunikationseinheit. Die Funktionen dieser Elektronikeinheiten sind hinlänglich bekannt, weshalb hier nicht näher darauf eingegangen wird.

Die Frontend-Elektronik 7 enthält eine Sendeeinrichtung bzw. Sendeschaltung 9, die die Messsignale erzeugt, eine Empfängereinrichtung bzw. Empfängerschaltung 10, die die entlang der Messstrecke reflektierten Signale empfängt, und einen Schaltungsteil 11 zur Zusammenschaltung von Sender 9, Empfänger 10 und Prozessankopplung 5.

Erfindungsgemäß bewirkt der Schaltungsteil 11, dass sich die Sendesignale, deren Ausbreitungsrichtung durch den Pfeil 12 gekennzeichnet ist, nicht oder nur in geringem definierten Maße über den gestrichelt dargestellten Signalweg 13 zu den Empfangssignalen addieren, deren Ausbreitungsrichtung durch den Pfeil 14 gezeigt ist.

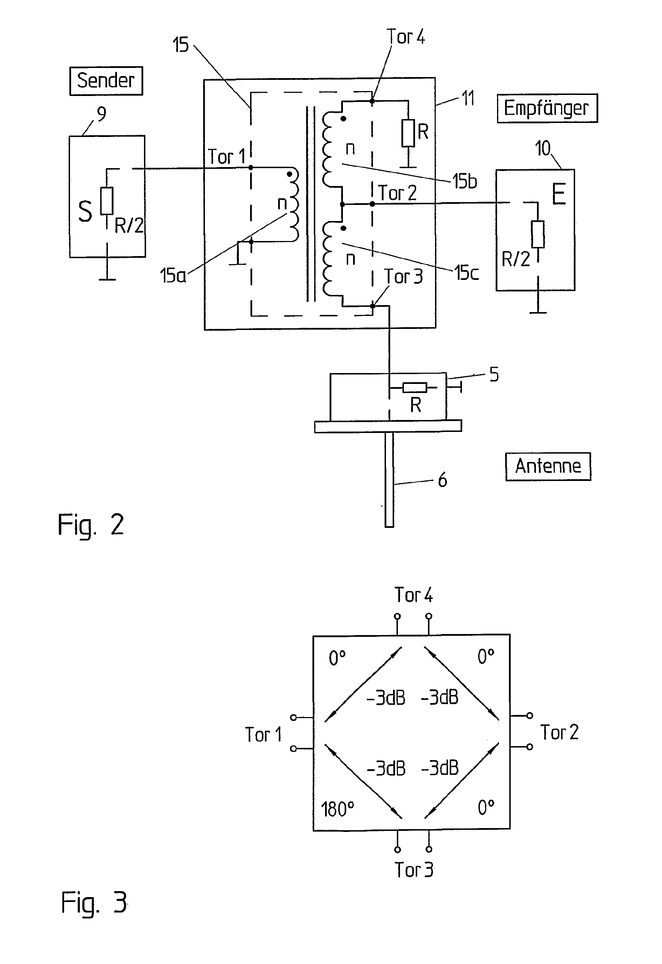

In Fig. 2 ist dargestellt, der Schaltungsteil 11 ausgeführt sein kann, um die geforderte Isolation zwischen Sender 9 und Empfänger 10 zu bewirken. Fig. 2 stellt keine Ausführungsform der vorliegenden Erfindung dar.

Durch entsprechende Beschaltung eines Differentialübertragers 15 ist sie sehr einfach und kostengünstig gelöst. Der Differentialübertrager 15 besitzt drei Wicklungen 15a, 15b und 15c, die durch einen gemeinsamen Ferritkern magnetisch miteinander verkoppelt sind. Dieser im Schaltbild nur indirekt durch die Andeutung der magnetischen Verkopplung dargestellte Ferritkern muss je nach dem Frequenzbereich der verwendeten Signale für sehr hohe Frequenzen, beispielsweise bis 2,5 GHz, geeignet sein.

Die drei Wicklungen des beispielhaften Übertragers von Fig. 2 bestehen aus jeweils n Windungen, wobei die Windungszahl n wiederum vom zu übertragenden Frequenzbereich und dem Ferritkern abhängt. Üblicherweise reichen schon 1 bis 10 Windungen für die beschriebene Anwendung aus.

Das vom Sender 9 an ein Tor 1 eingespeiste Sendesignal erscheint aus Symmetriegründen nur an Toren 3 und 4, aber nicht an einem Tor 2, an dem der Empfänger 10 angeschlossen ist. Die Signale an Tor 3 und Tor 4 haben gleiche Amplitude, sind aber zueinander gegenphasig. Die Prozessankopplung 5 ist in diesem Beispiel an Tor 3 angeschlossen und Tor 4 ist abgeschlossen mit einem Widerstand R. Die auf der Messstrecke reflektierten und an Tor 3 eintreffenden Signale werden gleichmäßig auf die Tore 1 und 2 verteilt, wohingegen in diesem Fall Tor 4 isoliert ist. Bei geeigneten Impedanzen der am Differentialübertrager 15 angeschlossenen Komponenten herrscht an allen Toren ideale Impedanzanpassung. Diese Eigenschaft sorgt dafür, dass empfangene Echosignale nicht zusätzliche Reflexionen erfahren und als sogenannte Mehrfachreflexionen Verfälschungen des Messergebnisses bewirken.
In Fig. 2 sind die Impedanzen der vier am Differentialübertrager angeschlossenen Komponenten dargestellt, die für die allseitige Anpassung nötig sind: An Tor 1 und 2 müssen gleiche Impedanzen (R/2) vorhanden sein, deren Wert halb so groß ist wie der Wert der gleichen Impedanzen (R) an Tor 3 und 4.

Fig. 3 zeigt den Signalfluss des Differentialübertragers 15 aus Fig. 2 in vereinfachter Viertor-Darstellung. Die Bezeichnung der Tore entspricht hier der Bezeichnung in Fig. 2. Es ist verdeutlicht, dass ein an Tor 1 eintreffendes Signal von der Leistung her gleichmäßig auf die Tore 3 und 4 aufgeteilt wird. Die Halbierung der Leistung wird markiert durch den Ausdruck "-3 dB". Die Signale von Tor 1 und Tor 4 sind gleichphasig, während das Signal an Tor 3 gegenphasig ("180") dazu erscheint. Aus Fig. 3 lässt sich schnell ablesen, wie bei Einspeisung eines Signals an einem beliebigen Tor die Verteilung an zwei benachbarte Tore bezüglich Amplitude und Phase geschieht. Das dem speisenden Tor gegenüberliegende Tor ist im Idealfall immer völlig isoliert. Voraussetzung hierfür ist jedoch wie bereits angedeutet, dass an allen Toren die in Fig. 2 gezeigten Impedanzen anliegen. Man erkennt außerdem, dass für gesendete, reflektierte und wieder empfangene Signale allein durch das Verhalten des Differentialübertragers eine Leistungsdämpfung von 6 dB auftritt. Durch leichte Impedanzänderung beispielsweise der absorbierenden Impedanz R an Tor 4 von Fig. 2 lässt sich die im Idealfall vollständige Isolation zwischen Tor 1 und Tor 2 definiert vermindern. Dadurch wird ein geringer Teil des Sendesignals von Tor 1 direkt zum Empfänger an Tor 2 gekoppelt. Dieser Signalanteil kann in vorteilhafter Weise als Entfernungs-Referenzmarke benutzt werden.

Wie aus Fig. 3 leicht zu erschließen ist, sind auch andere als die in Fig. 2 dargestellte Schaltungskombinationen möglich. Es eignen sich grundsätzlich alle Möglichkeiten, bei denen Sender 9 und Empfänger 10 an gegenüber liegenden Toren angeschlossen sind. Je nach Beschaltung ist wählbar, ob eine zusätzliche Phasenverschiebung von 180° innerhalb des Sende- Empfangswegs entsteht oder nicht.

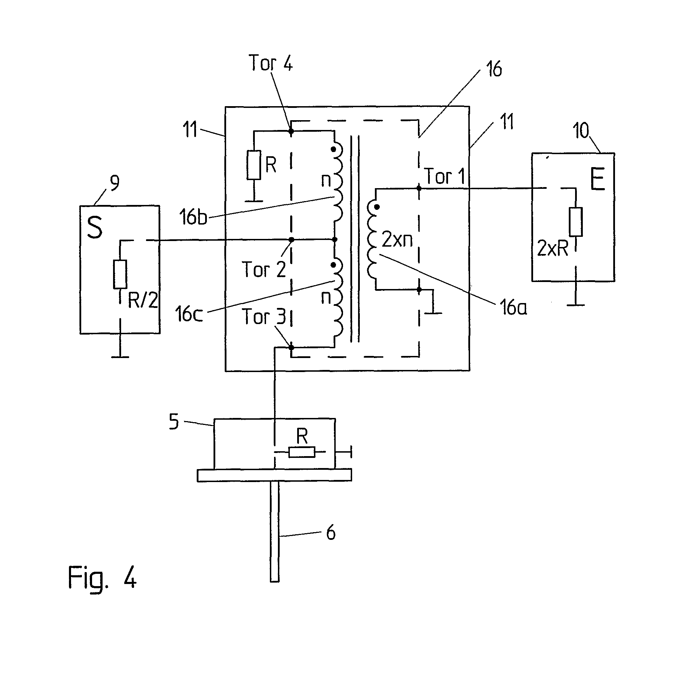

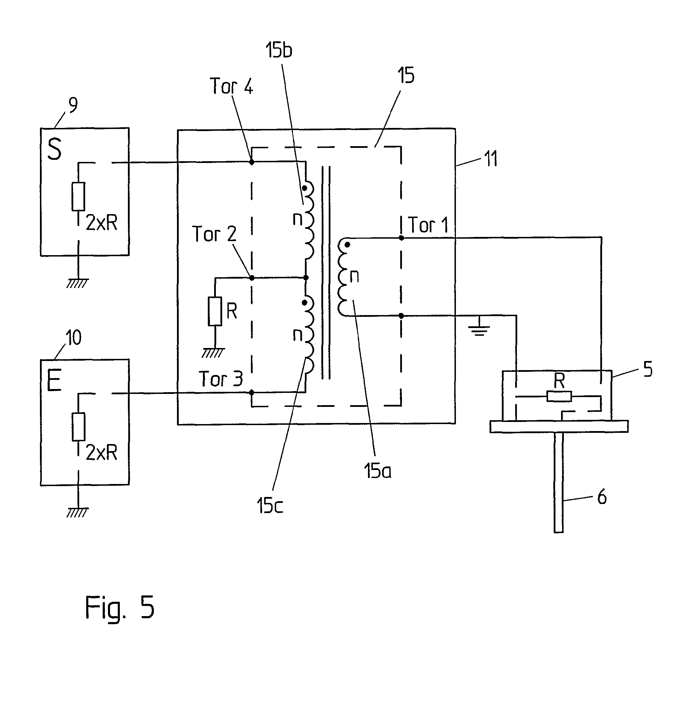

Eine dieser alternativen Schaltungsmöglichkeiten ist in Fig. 4 gezeigt. Der Sender 9 ist hier an Tor 2, der Empfänger 10 an Tor 1 angeschlossen. Die Prozessankopplung 5 bzw. Messstrecke ist wie in Fig. 2 mit Tor 3 verbunden. Bei dem hier verwendeten Differentialübertrager 16 sind die Windungszahlen nicht alle gleich, sondern die Wicklung 16a besitzt doppelt so viele Windungen wie die Wicklung 16b bzw. 16c. Dadurch bedingt ist die für allseitige Anpassung notwendige Impedanz des an der Wicklung 16a angeschlossenen Empfängers 10 viermal so hoch wie bei den Windungsverhältnissen in Fig. 2. Die höhere Empfängerimpedanz ist oft von Vorteil, weil Empfänger in vielen Fällen leichter hoch- als niederohmig ausführbar sind. Bei gegebener Empfängerimpedanz kann durch Anpassung der Wicklungsverhältnisse des Differentialübertragers für eine optimale Impedanzanpassung gesorgt werden. Eine weitere vorteilhafte Variante mit Differentialübertrager, die ebenfalls keine Ausführungsform der vorliegenden Erfindung darstellt, ist in Fig. 5 dargestellt.

Sender 9 und Empfänger 10 liegen sich an Tor 3 und 4 gegenüber, während die Prozessankopplung 5 an Tor 1 angeschlossen ist. Damit ist in einfacher Weise eine galvanische Potentialtrennung zwischen der Elektronik des Sensors einerseits und der Prozessankopplung und damit dem Behälterpotential andererseits möglich. Solche galvanische Potentialtrennungen werden gewöhnlich innerhalb der meisten Sensoren angestrebt, um Potentialausgleichströme zwischen Behälter und Schaltwarte über den Sensor zu vermeiden.

Ein weiterer Vorteil, der mehr oder weniger auf alle Lösungen, in denen die Prozessankopplung 5 an einem Übertrager angeschlossen ist, zutrifft, und aus der Schaltung von Fig. 5 besonders deutlich hervorgeht, ist die niederohmige Ableitung von statischer Aufladung auf dem Wellenleiter. Dieses Problem ergibt sich beispielsweise bei Kunststoffgranulat als Füllgut. Durch die Reibung des Füllguts am Wellenleiter bei Befüllung oder Entleerung kann sich dieser statisch aufladen. Die dabei entstehenden sehr hohen Spannungen können die elektronische Schaltung 7, die am Wellenleiter angeschlossen ist, zerstören, wenn sie nicht gegen Behältermasse abgeleitet werden. Aus Fig. 5 wird deutlich, dass die Wicklung 15a für die niederohmige Verbindung zwischen Wellenleiter 6 bzw. Prozessankopplung 5 und Behältermasse sorgt. Damit wird in einfacher Weise das Problem der statischen Aufladung bzw. Entladung gelöst.

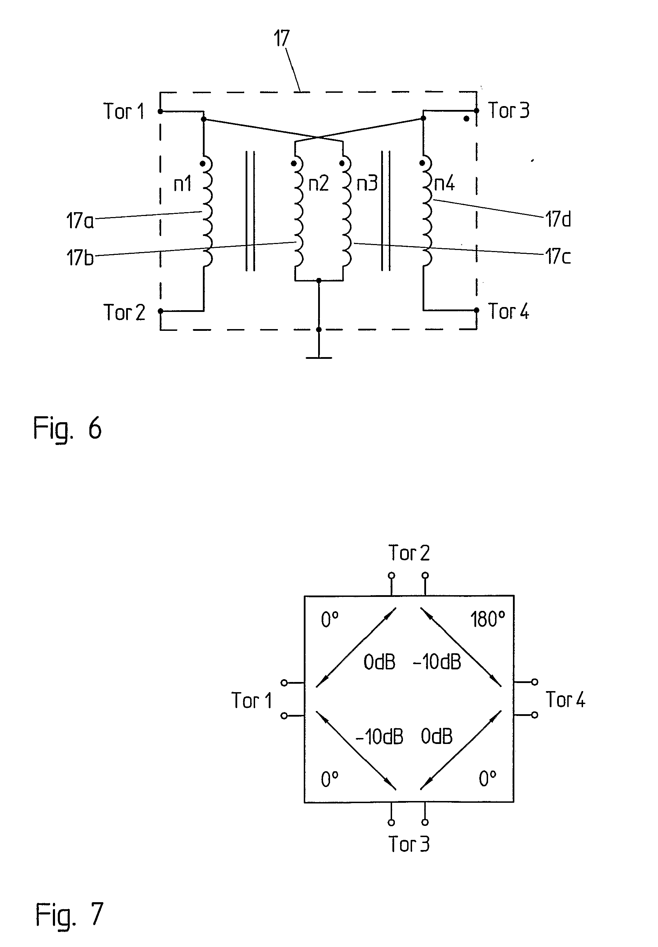

Für eine andere, erfindungsgemäße, Gruppe von Übertragern steht das Übertragerschaltbild von Fig. 6. Diese sogenannten Übertrager-Richtkoppler sind ebenso als Viertor zu betrachten und besitzen vier Wicklungen 17a, 17b, 17c und 17d mit oft unterschiedlichen Windungszahlen n1, n2, n3 und n4 auf dem gleichen Doppellochkern. Die Wicklungen 17a und 17b sind auf einen gemeinsamen Schenkel des Kerns gewickelt, während die Wicklungen 17c und 17d auf dem anderen Schenkel sitzen. Dieses Übertragerschema führt zu einer Signalaufteilung eingespeister Signale, wie sie in Fig. 7 für eine bestimmte beispielhafte Aufteilung der Windungszahlen gezeigt ist. Jedes an einem beliebigen Tor eingespeiste Signal teilt sich auf die zwei benachbarten Tore auf. Das gegenüber liegende Tor ist immer isoliert. Im Unterschied zum Differentialübertrager ist die Signalaufteilung nicht gleichmäßig, sondern immer ungleichmäßig. Während bei Einspeisung an Tor 1 das Signal nahezu ungedämpft zu Tor 2 läuft, kommt an Tor 3 nur ein beispielsweise um 10 dB gedämpfter Anteil an. Bei der Angabe der Dämpfungswerte ist der Wert "0 dB" als Rundung zu betrachten, denn wenn ein auch nur geringer Anteil zu Tor 3 läuft, muss auch der zu Tor 2 laufende Anteil etwas kleiner sein als das eingespeiste Signal. Zur Vereinfachung der Betrachtung können aber durchaus auch diese gerundeten Dämpfungswerte herangezogen werden. Zwischen Tor 2 und Tor 4 findet eine Phasendrehung von 180° statt, die man je nach Beschaltung des Übertragers in das aufgebaute Frontend-Konzept mit einbauen kann oder vermeidet.

Für den Anschluss von Sender, Empfänger und Prozessankopplung an das Viertor des Übertrager-Richtkopplers ergeben sich insgesamt 8 Varianten, die alle die Bedingung erfüllen, dass Sender und Empfänger an gegenüberliegenden, also voneinander entkoppelten Toren angeschlossen sind. Die Auswahl einer dieser Varianten richtet sich danach, welches Schaltungsschema in Zusammenhang mit vorliegenden oder realisierbaren Impedanzen der angeschlossenen Schaltungsteile möglichst Mehrfachreflexionen im Empfänger vermeidet und ob eine Phasendrehung von 180° zwischen Sende- und Empfangssignal gewünscht ist.

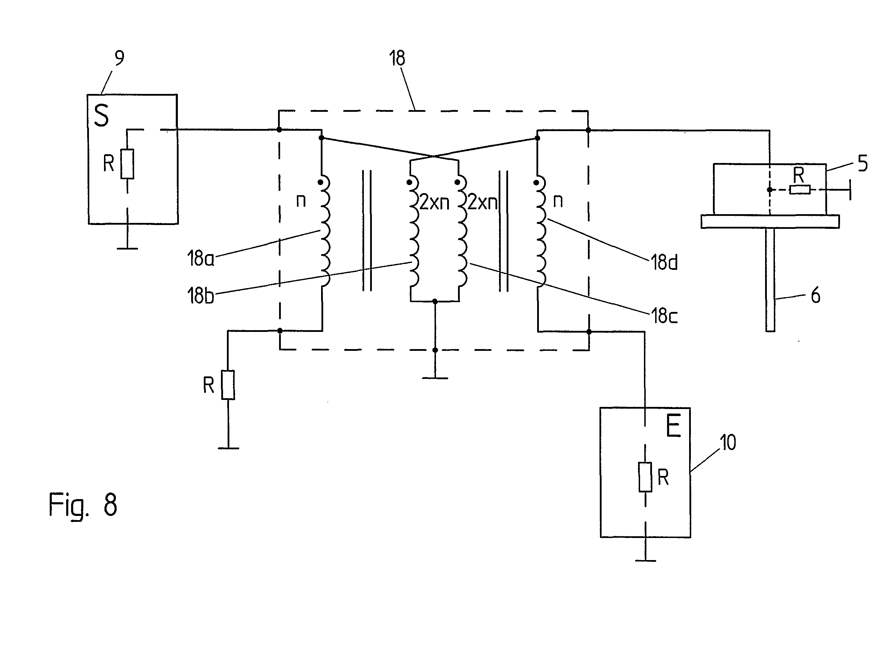

Ein Beispiel einer solchen erfindungsgemäßen Beschaltung des Übertrager-Richtkopplers aus Fig. 6 bzw. 7 zeigt Fig. 8. Der Sender 9 ist nun an Tor 1 angeschlossen, der Empfänger 10 an Tor 4 und die Prozessankopplung 5 an Tor 3. Tor 2 ist reflexionsfrei abgeschlossen mit dem Widerstand R. Die Windungszahlen sind gleich für die Wicklungen 18a und 18d, während die Wicklungen 18b und 18c doppelt so viele Windungen besitzen. Durch Abschluss aller Tore mit der gleichen Impedanz R liegt allseitige Anpassung vor, so dass keine Mehrfachreflexionen entstehen können. Ein vom Sender an Tor 1 geliefertes Signal wird zum Großteil im Widerstand R an Tor 4 absorbiert, während ein um beispielsweise 10 dB gedämpfter Anteil weiter von Tor 3 zur Prozessankopplung 5 und dem Wellenleiter 6 läuft. Reflektierte Signale treffen an Tor 3 ein und gelangen weitgehend ungedämpft an den an Tor 4 angeschlossenen Empfänger. Ein kleiner Anteil des reflektierten Signals wird auch zum Tor 1 geleitet, wo er im impedanzangepassten Sender absorbiert wird.

Die Signaldämpfung durch den Einsatz des Übertrager-Richtkopplers 18 beträgt im dargestellten Beispiel mindestens 10 dB. Diese Dämpfung ist zwar größer als bei Einsatz eines Differentialübertragers, aber hier ist es von Vorteil, dass im Empfangsfall für an Tor 3 eintreffende Signale hauptsächlich nur die Empfängerimpedanz an Tor 4 für die reflexionsfreie Signalanpassung wichtig ist. Diese Anpassung lässt sich durch geeignete Maßnahmen am Empfänger meist verwirklichen, während die geeignete Impedanzanpassung des Senders eventuell schwieriger ist. Diese spielt jedoch bei dieser Schaltung in vorteilhafter Weise eine untergeordnete Rolle.

Genau wie beim Differentialübertrager ist auch hier durch eine leichte Impedanzverstimmung beispielsweise am Widerstand R an Tor 2 eine geringe Überkopplung des Sendesignals von Tor 1 zum Empfänger an Tor 4 definiert einstellbar. Dieses übersprechende Signal ist wie bereits beschrieben als Entfernungs-Referenzmarke von Nutzen.

Die Kopplungsdämpfung, in obigem Beispiel mit 10 dB angegeben, lässt sich durch die Festlegung der verschiedenen Windungszahlen relativ frei in einem Bereich zwischen 6 dB und 20 dB wählen.

Die beschriebenen Lösungen zur Zusammenschaltung von Sender, Empfänger und Prozessankopplung eignen sich ganz allgemein für Basisband-Radarsensoren in monostatischer Ausführung. Im besonderen sind sie einsetzbar bei sogenannten Monopuls-TDR-Sensoren zur Füllstandmessung. Diese senden einen nicht auf eine Trägerfrequenz aufmodulierten kurzen Puls über einen Wellenleiter zum Füllgut und zurück und bestimmen anhand der Laufzeit die Füllgutentfernung bzw. den Behälterfüllstand. Der für das Messsignal hauptsächlich benutzte Frequenzbereich liegt unterhalb von ca. 2 GHz, weshalb die vorgeschlagenen Doppelloch-Übertrager dafür bestens geeignet sind.

Es gibt daneben noch andere einschlägig bekannte Übertragerformen, welche zu diesem Zweck geeignet sind, beispielsweise ein trifilar bewickelter ringförmiger Kern. Seine Breitbandigkeit resultiert aus der speziellen Art der Bewicklung, die bei hohen Frequenzen eine kapazitive Leitungskopplung zwischen den Windungsdrähten ermöglicht.

## Patentansprüche

1. Füllstandmessgerät, eingerichtet zur Messung eines Füllstandes mittels Messens einer Laufzeitmessung von elektromagnetischen Wellen zwischen Elektronikeinheit (4) und Füllgut (2), mit
der Elektronikeinheit (4), die eine Sendeeinrichtung (9) und eine Empfangseinrichtung (10) für elektromagnetische Wellen mit einer Frequenz kleiner 3 GHz aufweist,
einer an die Elektronikeinheit (4) angeschlossenen Prozessankopplung (5), die die Sendesignale auf die Messstrecke leitet und von dem Füllgut (2) reflektierte Signale zur Elektronikeinheit (4) zurück leitet, und
einem in der Elektronikeinheit (4) vorgesehenen Transformator (17,18), der zwischen der Sendeeinrichtung (9), der Empfangseinrichtung (10) und der Prozessankopplung (5) angeschlossen ist;
wobei der Transformator ein Übertrager-Richtkoppler (17,18) mit vier Wicklungen (18a, 18b, 18c, 18d) ist.

2. Füllstandmessgerät nach Anspruch 1, **dadurch gekennzeichnet, dass** die Sendeeinrichtung (9) und die Empfangseinrichtung (10) an einem von dem Potential der Prozessankopplung (5) galvanisch getrennten Potential angeschlossen sind.

3. Füllstandmessgerät nach Anspruch 1 oder 2, **dadurch gekennzeichnet, dass** die vier Wicklungen (18a, 18b,18c, 18d) auf dem gleichen Doppellochkern unterschiedliche Windungszahlen haben.

4. Füllstandmessgerät nach Anspruch 1 oder 2, **dadurch gekennzeichnet, dass** die Wicklungen (18a, 18b ; 18c,18d) auf dem gleichen Doppellochkern sich um den Faktor 2 unterscheiden.

5. Füllstandmessgerät nach einem der vorhergehenden Ansprüche, **dadurch gekennzeichnet, dass**
die Sendeeinrichtung (9) und die Empfangseinrichtung (10) an einander gegenüberliegenden, entkoppelten Toren des Übertrager-Richtkopplers (17,18) angeschlossen sind und die Prozessankopplung (5) an einem der anderen Tore angeschlossen ist.

6. Füllstandmessgerät nach Anspruch 5, **dadurch gekennzeichnet, dass** die Sendeeinrichtung (9) am Tor 1 des Übertrager-Richtkopplers (18) angeschlossen ist, die Empfangseinrichtung (10) am Tor 4 des Übertrager-Richtkopplers (18) angeschlossen ist und die Prozessankopplung (5) am Tor 3 des Übertrager-Richtkopplers (18) angeschlossen ist.

7. Füllstandmessgerät nach einem der voranstehenden Ansprüche, **dadurch gekennzeichnet, dass**
der Transformator (15-18) ein Doppelloch-Übertrager in SMD-Bauweise ist.

8. Füllstandmessgerät nach Anspruch 1, **dadurch gekennzeichnet, dass** der Transformator ein trifilar bewickelter ringförmiger Kern ist.

9. Füllstandmessgerät nach einem der voranstehenden Ansprüche, **dadurch gekennzeichnet, dass**
der Transformator (17, 18) so ausgebildet ist, dass das zu speisende Tor von einem der drei übrigen Tore vollständig isoliert ist.

10. Füllstandmessgerät nach einem der Ansprüche 1-8, **dadurch gekennzeichnet, dass** der Transformator (17, 18) so ausgebildet ist, dass das zu speisende Tor von allen anderen Toren definiert nicht vollständig isoliert ist.

11. Verfahren zum Senden und Empfangen von elektromagnetischen Wellen mit einer Frequenz kleiner 3 GHz über eine Prozessankopplung (5) und zum Messen eines Füllstands mittels Messens einer Laufzeit der elektromagnetischen Wellen zwischen einer Elektronikeinheit (4) und Füllgut (4), bei dem Sendesignale einer Sendeeinrichtung (9) in der Elektronikeinheit (4) über einen Transformator (17,18) in die Prozessankopplung (5) geleitet werden und die an dem Füllgut (2) reflektierten, über die Prozessankopplung (5) geleiteten Signale über den gleichen Transformator (17,18) zu einer Empfangseinrichtung (10) in der Elektronikeinheit (4) geleitet werden, wobei der Transformator (17,18) zwischen der Sendeeinrichtung (9), der Empfangseinrichtung (10) und der Prozessankopplung (5)
angeschlossen ist, wobei der Transformator ein Übertrager-Richtkoppler (17,18) mit vier Wicklungen (18a, 18b, 18c, 18d) ist.

12. Verfahren nach Anspruch 11, **dadurch gekennzeichnet, dass**
kein für die Messung nutzbarer Anteil eines Sendesignals von der Sendeeinrichtung (9) über den Transformator (17,18) zu der Empfangseinrichtung (10) geleitet wird.

13. Verfahren nach Anspruch 11, **dadurch gekennzeichnet, dass**
zu Messzwecken ein definierter Anteil eines Sendesignals von der Sendeeinrichtung (9) über den Transformator (17,18) unmittelbar zu der Empfangseinrichtung (10) geleitet wird.

14. Verwendung eines Transformators (17,18) in einem Füllstandmessgerät, das zur Messung eines Füllstands mittels Messen einer Laufzeit von elektromagnetischen Wellen zwischen einer Elektronikeinheit (4) und Füllgut (2) eingerichtet ist, wobei der Transformator (17,18) zum Weiterleiten von in einer Sendeeinrichtung (9) der Elektronikeinheit (4) erzeugten Sendesignalen mit einer Frequenz kleiner 3 GHz zu einer Prozessankopplung (5) und zum Weiterleiten von an dem Füllgut (2) reflektierten, über die Prozessankopplung (5) geleiteten Empfangssignalen zu einer Empfangseinrichtung (10) der Elektronik (4) verwendet wird, wobei der Transformator (17,18) zwischen der Sendeeinrichtung (9), der Empfangseinrichtung (10) und der Prozessankopplung (5) angeschlossen ist, wobei der Transformator ein Übertrager-Richtkoppler (17,18) mit vier Wicklungen (18a, 18b, 18c, 18d) ist.

## Claims

1. Fill level measuring device designed to measure a fill level by measuring a transit time measurement of electromagnetic waves between an electronics unit (4) and a filling material (2), comprising
the electronics unit (4), which comprises a transmission means (9) and a receiving means (10) for electromagnetic waves having a frequency of less than 3 GHz,
a process connection (5) which is connected to the electronics unit (4), conducts the transmitted signals to the measured portion, and conducts the signals reflected by the filling material (2) back to the electronics unit (4), and
a transformer (17, 18) which is provided in the electronics unit (4) and is connected between the transmission means (9), the receiving means (10) and the process connection (5); wherein the transformer is a transformer directional coupler (17, 18) having four windings (18a, 18b, 18c, 18d).

2. Fill level measurement device according to claim 1, **characterised in that** the transmission means (9) and the receiving means (10) are connected to a potential that is galvanically isolated from the potential of the process connection (5).

3. Fill level measurement device according to either claim 1 or claim 2, **characterised in that** the four windings (18a, 18b, 18c, 18d) have different numbers of turns on the same double-punch core.

4. Fill level measurement device according to either claim 1 or claim 2, **characterised in that** the windings (18a, 18b; 18c, 18d) on the same double-punch core differ by a factor of two.

5. Fill level measurement device according to any of the preceding claims,
**characterised in that**
the transmission means (9) and the receiving means (10) are connected to mutually opposite, decoupled ports of the transformer directional coupler (17, 18) and the process connection (5) is connected to one of the other ports.

6. Fill level measurement device according to claim 5, **characterised in that** the transmission means (9) is connected to port 1 of the transformer directional coupler (18), the receiving means (10) is connected to port 4 of the transformer directional coupler (18) and the process connection (5) is connected to port 3 of the transformer directional coupler (18).

7. Fill level measurement device according to any of the preceding claims,
**characterised in that**
the transformer (15-18) is a double-punch transformer in an SMD design.

8. Fill level measurement device according to claim 1, **characterised in that** the transformer is a trifilar-wound, annular core.

9. Fill level measurement device according to any of the preceding claims,
**characterised in that**
the transformer (17, 18) is formed such that the port to be fed is completely isolated from one of the three remaining ports.

10. Fill level measuring device according to any of claims 1-8, **characterised in that** the transformer (17, 18) is formed such that the port to be fed is, in a defined manner, not completely isolated from all the other ports.

11. Method for transmitting and receiving electromagnetic waves having a frequency of less than 3 GHz via a process connection (5), and for measuring a fill level by measuring a transit time of the electromagnetic waves between an electronics unit (4) and a filling material (4), in which transmitted signals from a transmission means (9) in the electronics unit (4) are conducted into the process connection (5) via a transformer (17, 18) and the signals that are reflected at the filling material (2) and conducted via the process connection (5) are conducted to a receiving means (10) in the electronics unit (4) via the same transformer (17, 18), wherein the transformer (17, 18) is connected between the transmission means (9), the receiving means (10) and the process connection (5), wherein the transformer is a transformer directional coupler (17, 18) having four windings (18a, 18b, 18c, 18d).

12. Method according to claim 11, **characterised in that**
no portion of a transmitted signal that can be used for the measurement is conducted from the transmission means (9) to the receiving means (10) via the transformer (17, 18).

13. Method according to claim 11, **characterised in that**,
for the purpose of measuring, a defined portion of a transmitted signal is conducted directly from the transmission means (9) to the receiving means (10) via the transformer (17, 18).

14. Use of a transformer (17, 18) in a fill level measuring device which is designed to measure a fill level by measuring a transit time of electromagnetic waves between an electronics unit (4) and a filling material (2), wherein the transformer (17, 18) is used for forwarding transmitted signals having a frequency of less than 3 GHz which are generated in a transmission means (9) of the electronic unit (4) to a process connection (5) and for forwarding received signals, which are reflected at the filling material (2) and conducted via the process connection (5), to a receiving means (10) of the electronic system (4), wherein the transformer (17, 18) is connected between the transmission means (9), the receiving means (10) and the process connection (5), wherein the transformer is a transformer directional coupler (17, 18) having four windings (18a, 18b, 18c, 18d).

## Revendications

1. Appareil de mesure de niveau, conçu pour mesurer un niveau par mesure du temps de propagation d'ondes électromagnétiques entre l'unité électronique (4) et la charge (2), comprenant l'unité électronique (4), qui présente un dispositif d'émission (9) et un dispositif de réception (10) pour des ondes électromagnétiques d'une fréquence de moins de 3 GHz, un couplage de processus (5) raccordé à l'unité électronique (4), qui transmet les signaux émis à la section de mesure et renvoie à l'unité électronique (4) des signaux réfléchis par la charge (2), et
un transformateur (17, 18) prévu dans l'unité électronique (4), qui est raccordé entre le dispositif d'émission (9), le dispositif de réception (10) et le couplage de processus (5) ;
le transformateur étant un coupleur directionnel - transmetteur (17, 18) avec quatre enroulements (18a, 18b, 18c, 18d).

2. Appareil de mesure de niveau selon la revendication 1, **caractérisé en ce que** le dispositif d'émission (9) et le dispositif de réception (10) sont reliés à un potentiel à séparation galvanique du potentiel du couplage de processus (5).

3. Appareil de mesure de niveau selon l'une des revendications 1 et 2, **caractérisé en ce que** les quatre enroulements (18a, 18b, 18c, 18d) ont des nombres de spires différents sur le même noyau à double trou.

4. Appareil de mesure de niveau selon l'une des revendications 1 et 2, **caractérisé en ce que** les enroulements (18a, 18b ; 18c, 18d) diffèrent du facteur 2 sur le même noyau à double trou.

5. Appareil de mesure de niveau selon l'une des revendications précédentes, **caractérisé en ce que** le dispositif d'émission (9) et le dispositif de réception (10) sont reliés à des portes découplées, en vis-à-vis mutuel, du coupleur directionnel - transmetteur (17, 18) et le couplage de processus (5) est relié à l'une des autres portes.

6. Appareil de mesure de niveau selon la revendication 5, **caractérisé en ce que** le dispositif d'émission (9) est relié à la porte 1 du coupleur directionnel - transmetteur (18), le dispositif de réception (10) est relié à la porte 4 du coupleur directionnel - transmetteur (18), et le couplage de processus (5) est relié à la porte 3 du coupleur directionnel - transmetteur (18).

7. Appareil de mesure de niveau selon l'une des revendications précédentes, **caractérisé en ce que** le transformateur (15 - 18) est un transmetteur à double trou du type SMD.

8. Appareil de mesure de niveau selon la revendication 1, **caractérisé en ce que** le transformateur est un noyau annulaire à enroulement trifilaire.

9. Appareil de mesure de niveau selon l'une des revendications précédentes, **caractérisé en ce que** le transformateur (17, 18) est réalisé de sorte que la porte à alimenter est totalement isolée de l'une des trois autres portes.

10. Appareil de mesure de niveau selon l'une des revendications 1 - 8, **caractérisé en ce que** le transformateur (17, 18) est réalisé de sorte que la porte à alimenter n'a pas une isolation totale définie de toutes les autres portes.

11. Procédé d'émission et de réception d'ondes électromagnétiques d'une fréquence de moins de 3 GHz à travers un couplage de processus (5) et pour la mesure d'un niveau par mesure d'un temps de propagation des ondes électromagnétiques entre une unité électronique (4) et une charge (2), procédé dans lequel des signaux émis d'un dispositif d'émission (9) dans l'unité électronique (4) sont transmis par l'intermédiaire d'un transformateur (17, 18) au couplage de processus (5) et les signaux, réfléchis sur la charge (2) et transmis à travers le couplage de processus (5), sont envoyés par l'intermédiaire du même transformateur (17, 18) à un dispositif de réception (10) dans l'unité électronique (4), le transformateur (17, 18) étant raccordé entre le dispositif d'émission (9), le dispositif de réception (10) et le couplage de processus (5), le transformateur étant un coupleur directionnel - transmetteur (17, 18) avec quatre enroulements (18a, 18b, 18c, 18d).

12. Procédé selon la revendication 11, **caractérisé en ce qu'**aucune part d'un signal émis, utilisable pour la mesure, n'est transmise par le dispositif d'émission (9), par l'intermédiaire du transformateur (17, 18), au dispositif de réception (10).

13. Procédé selon la revendication 11, **caractérisé en ce que**, à des fins de mesure, une part définie d'un signal émis est transmise directement par le dispositif d'émission (9), par l'intermédiaire du transformateur (17, 18), au dispositif de réception (10).

14. Utilisation d'un transformateur (17, 18) dans un appareil de mesure de niveau, conçu pour la mesure d'un niveau par mesure d'un temps de propagation d'ondes électromagnétiques entre une unité électronique (4) et une charge (2), le transformateur (17, 18) étant utilisé pour transmettre des signaux d'émission d'une fréquence de moins de 3 GHz, générés dans un dispositif d'émission (9) de l'unité électronique (4), à un couplage de processus (5) et pour transmettre des signaux de réception, réfléchis sur la charge (2) et envoyés à travers le couplage de processus (5), à un dispositif de réception (10) de l'électronique (4), le transformateur (17, 18) étant raccordé entre le dispositif d'émission (9), le dispositif de réception (10) et le couplage de processus (5), le transformateur étant un coupleur directionnel - transmetteur (17, 18) avec quatre enroulements (18a, 18b, 18c, 18d).
